# FASCICULE DE BREVET EUROPEEN

(11) **EP 4 724 762 B1**
(45) Date de publication et mention de la délivrance du brevet: **25.11.2026**
(21) Numéro de dépôt: 24731571.6
(22) Date de dépôt: 06.06.2024
(51) Int. Cl.: F28F 1/02, B64D 13/00, F28F 9/02

(54) **DISPOSITIF D'ÉCHANGE THERMIQUE COMPRENANT AU MOINS UN COLLECTEUR, SYSTÈME DE CONDITIONNEMENT D'AIR ET VÉHICULE**
WÄRMETAUSCHERVORRICHTUNG MIT MINDESTENS EINEM VERTEILER SOWIE KLIMAANLAGE UND FAHRZEUG
HEAT EXCHANGE DEVICE COMPRISING AT LEAST ONE MANIFOLD, AND AIR CONDITIONING SYSTEM AND VEHICLE

(30) Priorité: 07.06.2023 FR 2305764
(43) Date de publication de la demande: 15.04.2026
(73) Titulaire: Liebherr-Aerospace Toulouse SAS, 31016 Toulouse Cedex 2 (FR)
(72) Inventeur: BONNIVARD, Florian, 31016 Toulouse Cedex 2 (FR); ANGELIQUE, Romain, 31016 Toulouse Cedex 2 (FR); LARAT, Antoine, 31016 Toulouse Cedex 2 (FR); MEUNIER, Stéphane, 31016 Toulouse Cedex 2 (FR); HANSS, Grégoire, 31016 Toulouse Cedex 2 (FR)
(74) Mandataire: Bringer IP
(86) Numéro de dépôt international: PCT/EP2024/065564
(87) Numéro de publication internationale: WO 2024/251862

(56) Documents cités:
- WO-A1-2020/109707
- US-A1- 2018 345 425
- US-A1- 2020 309 459
- US-A1- 2022 048 635
- US-A1- 2022 357 110

## Description

### Domaine technique de l'invention

L'invention concerne un dispositif d'échange thermique, tel qu'un échangeur de chaleur pour un aéronef ou encore un système de refroidissement hydraulique, comprenant au moins un collecteur d'alimentation et/ou de sortie.

### Arrière-plan technologique

Les échangeurs de chaleurs sont utilisés pour permettre un transfert thermique entre au moins deux fluides, liquides et/ou gazeux, en particulier pour refroidir ou réchauffer l'un des fluides à l'aide d'un autre fluide. Les échangeurs de chaleur sont utilisés dans de nombreux contextes, dans les systèmes de refroidissement de dispositifs électroniques par exemple ou encore dans les systèmes de conditionnement d'air pour véhicule aérien, ferroviaire ou terrestre.

Un système de contrôle environnemental d'une cabine d'un aéronef, plus connu sous l'acronyme ECS pour la dénomination anglaise « Environmental Control System » est destiné à fournir à la cabine de l'aéronef (qui désigne de manière générale tout espace intérieur de l'aéronef dont la pression et/ou la température de l'air doit être contrôlée, tel qu'une cabine pour passagers, le cockpit de pilotage, une soute, etc.) un air à pression et/ou température contrôlées.

La plupart des échangeurs thermiques aujourd'hui utilisés à bord des aéronefs sont constitués d'échangeurs de chaleur du type à ailettes ou plaques. Ces échangeurs sont formés d'une chambre d'échanges thermiques de forme généralement parallélépipédique et comprennent des couches empilées d'ailettes, par exemple ondulées qui forment des canaux de circulation entre deux plaques et qui s'étendent alternativement dans des directions perpendiculaires d'une couche par rapport à une autre. Ainsi, la passe chaude qui alimente une face de l'échangeur circule dans les canaux des différentes couches dites chaudes et la passe froide qui alimente une face perpendiculaire de l'échangeur circule dans les canaux transverses des couches dites froides intercalées entre deux couches chaudes. Une telle architecture permet d'intercaler chaque couche chaude entre deux couches froides sur toute la longueur de l'échangeur et donc d'assurer des échanges thermiques entre les deux fluides.

Ces échangeurs thermiques permettent de refroidir l'air prélevé sur les moteurs ou l'air ambiant compressé par des compresseurs dédiés, avant d'être traité par les autres équipements du système de conditionnement d'air pour pouvoir alimenter la cabine de l'aéronef. La capacité de refroidissement d'un échangeur est directement proportionnelle à son encombrement.

Or, l'encombrement et la masse d'un échangeur thermique sont deux caractéristiques critiques pour les avionneurs comme dans d'autres applications, tout en cherchant à atteindre des performances de refroidissement importantes.

A titre d'alternative aux échangeurs de chaleur à plaques intégrés dans des véhicules atmosphériques, le document WO 2020/109707 propose un échangeur de chaleur permettant d'augmenter les surfaces d'échanges au sein de l'échangeur tout en limitant au maximum l'encombrement de l'échangeur grâce à une matrice formée de tubulures d'échanges thermiques logée dans une chambre de circulation de fluide, chaque tubulure comprenant au moins un conduit intérieur et un conduit extérieur imbriqués l'un dans l'autre.

Les inventeurs ont constaté qu'il n'existait pas de collecteur d'alimentation et/ou de sortie adapté à une telle matrice formée de tubulures présentant un encombrement et une masse satisfaisants.

US 2018/0345425 décrit un échangeur de chaleur comprenant une pluralité de bancs d'échange de chaleur traversant une chambre de l'échangeur de chaleur, chaque banc comprenant une pluralité de tubes d'échange de chaleur. Des collecteurs permettent une communication de fluide entre les bancs d'échange de chaleur adjacents entre eux sous la forme de ports de connexion. Des répartiteurs de flux sont prévus au sein de boîtes d'entrée et de sortie.

L'invention vise donc à proposer un dispositif d'échange thermique permettant de proposer une solution adaptée à la distribution de chaque fluide en entrée et/ou en sortie d'un échangeur de chaleur comprenant de telles tubulures.

### Objectifs de l'invention

L'invention vise à fournir un dispositif d'échange thermique présentant une excellente efficacité de distribution du fluide.

L'invention vise en particulier à fournir un dispositif d'échange thermique présentant une excellente compacité, en particulier un encombrement et une masse limités.

L'invention vise également à fournir un dispositif d'échange thermique présentant une excellente efficacité.

### Exposé de l'invention

Pour ce faire, l'invention concerne un dispositif d'échange thermique comprenant :
- une enceinte de circulation comprenant une première entrée d'un premier fluide caloporteur dans l'enceinte de circulation et une première sortie dudit premier fluide caloporteur hors de l'enceinte de circulation,
- une matrice d'échanges thermiques logée dans ladite enceinte de circulation et formée d'une pluralité de tubulures d'échanges thermiques, chaque tubulure d'échanges thermiques comprenant au moins un conduit et s'étendant principalement selon une direction longitudinale entre deux extrémités opposées l'une par rapport à l'autre, chaque conduit délimitant au moins en partie un canal de circulation d'un deuxième fluide caloporteur,
- une deuxième entrée dudit deuxième fluide caloporteur dans l'enceinte de circulation,
- une deuxième sortie dudit deuxième fluide caloporteur hors de l'enceinte de circulation,
caractérisé en ce qu'il comprend en outre :
- au moins un collecteur comprenant au moins une portion de conduite et comprenant l'une de ladite deuxième entrée dudit deuxième fluide caloporteur et de ladite deuxième sortie dudit deuxième fluide caloporteur, ledit collecteur ne s'étendant pas parallèlement à ladite direction longitudinale de chaque tubulure d'échanges thermiques, ledit collecteur comprenant une pluralité d'orifices, chaque collecteur étant configuré pour permettre une circulation dudit deuxième fluide caloporteur entre l'une de ladite deuxième entrée dudit deuxième fluide caloporteur et de ladite deuxième sortie dudit deuxième fluide caloporteur et lesdits orifices,
- au moins une rampe de distribution de fluide configurée pour permettre la circulation dudit deuxième fluide caloporteur entre au moins un orifice dudit collecteur et au moins deux tubulures d'échanges thermiques, chaque orifice dudit collecteur débouchant vers une rampe de distribution, et au moins une extrémité longitudinale de chaque tubulure d'échanges thermiques étant reliée à une rampe de distribution.

Un dispositif d'échange thermique selon l'invention permet donc de procurer une solution de collecte en entrée et/ou en sortie d'une matrice d'échanges thermiques la plus compacte possible. Il en résulte un encombrement réduit du dispositif d'échange thermique. Ceci permet ainsi de rendre possible de nombreuses configurations d'intégration dans un système de conditionnement d'air par exemple.

Ainsi, d'une part, chaque collecteur relie l'une de ladite deuxième entrée dudit deuxième fluide caloporteur et de ladite deuxième sortie dudit deuxième fluide caloporteur et lesdits orifices, et, d'autre part, chaque rampe de distribution de fluide relie ledit collecteur et lesdites au moins deux tubulures d'échanges thermiques de ladite matrice d'échanges thermiques. Ainsi, avantageusement et selon l'invention, ledit au moins un collecteur relie en communication de fluide l'une de ladite deuxième entrée dudit deuxième fluide caloporteur et de ladite deuxième sortie dudit deuxième fluide caloporteur et ladite au moins une rampe de distribution. Lorsque l'on considère la circulation dudit deuxième fluide, chaque collecteur est donc disposé entre ladite deuxième entrée ou ladite deuxième sortie dudit deuxième fluide caloporteur et au moins une rampe de distribution dudit deuxième fluide, ledit deuxième fluide pouvant circuler à l'intérieur de chaque collecteur et de chaque rampe de distribution.

Le collecteur présente l'avantage de pouvoir prévoir l'arrivée et/ou la sortie dudit deuxième fluide latéralement par rapport à la matrice d'échanges thermiques et non dans son prolongement longitudinal. Le collecteur, et donc chaque portion de conduite de celui-ci, ne s'étend pas parallèlement (et sans être confondu) à la direction longitudinale de chaque tubulure d'échanges thermiques. Le collecteur peut s'étendre sensiblement dans un plan orthogonal à ladite direction longitudinale ou encore de façon non strictement contenue dans un plan, en présentant des formes globalement courbées et s'étendant sensiblement principalement dans un plan formant un angle non nul, par exemple inférieur à 30°, avec un plan orthogonal à ladite direction longitudinale de chaque tubulure d'échanges thermiques. Avantageusement et selon l'invention, ledit collecteur s'étend sensiblement principalement dans un plan orthogonal à ladite direction longitudinale de chaque tubulure d'échanges thermiques.

Avantageusement et selon l'invention, le dispositif d'échange thermique selon l'invention comprend :
- un premier passage, dit passage du premier fluide caloporteur, permettant la circulation d'un flux du premier fluide caloporteur dans l'enceinte de circulation entre la première entrée et la première sortie, et
- un deuxième passage, dit passage du deuxième fluide caloporteur, permettant la circulation d'un flux du deuxième fluide caloporteur dans l'enceinte de circulation entre la deuxième entrée et la deuxième sortie.

La combinaison selon l'invention d'un collecteur comprenant une ou plusieurs portions de conduite et de rampes de distribution permettant la circulation du fluide depuis la ou lesdites portions de conduite du collecteur jusqu'à chaque conduit des tubulures de la matrice d'échanges thermiques (ou inversement depuis chaque conduit des tubulures de la matrice d'échanges thermiques via lesdites rampes de distribution jusqu'aux orifices du collecteur dans le cas d'un collecteur de sortie). Ainsi, avantageusement et selon l'invention, chaque portion de conduite dudit collecteur s'étend de façon à entourer, au moins en partie, ladite matrice d'échanges thermiques. Chaque portion de conduite dudit collecteur peut présenter diverses formes. Chaque portion de conduite dudit collecteur peut présenter une section variable, notamment une section diminuant à partir de l'entrée de fluide à l'intérieur du collecteur.

Avantageusement et selon l'invention, ladite matrice d'échanges thermiques présente une section droite transversale de forme polygonale. Avantageusement et selon l'invention, ladite section droite transversale de ladite matrice d'échanges thermiques présente une forme de quadrilatère.

Dans une variante particulièrement avantageuse d'un dispositif d'échange thermique selon l'invention, le collecteur s'étend en regard d'au moins trois faces principales de ladite matrice d'échanges thermiques. Avantageusement et selon l'invention, ledit collecteur s'étend de façon à entourer, sans interruption, trois desdites quatre faces principales de ladite matrice d'échanges thermiques.

Avantageusement et selon l'invention, chaque collecteur présente une forme générale en U, ou encore en C. En particulier, avantageusement et selon l'invention, chaque extrémité libre des ailes dudit U s'étend jusqu'à une arête d'une face principale de ladite matrice d'échanges thermiques.

Ledit collecteur présentant une forme en U est donc composé de trois portions reliées entre elles par deux coudes. Avantageusement et selon l'invention, ledit collecteur comprend une portion de conduite centrale s'étendant selon une direction principale entre une première extrémité et une deuxième extrémité, une première extrémité de ladite portion de conduite principale étant prolongée d'une première portion de conduite latérale et une deuxième extrémité de ladite portion de conduite principale étant prolongée d'une deuxième portion de conduite latérale, ladite première portion de conduite latérale et ladite deuxième portion de conduite latérale s'étendant chacune selon une direction sensiblement orthogonale à la direction principale de ladite portion de conduite centrale.

Avantageusement et selon l'invention, chaque portion de conduite centrale dudit collecteur comprend l'une de ladite deuxième entrée dudit deuxième fluide caloporteur et de ladite deuxième sortie dudit deuxième fluide caloporteur. Dans une variante particulièrement avantageuse d'un dispositif d'échange thermique selon l'invention, la portion de conduite centrale dudit collecteur comprend ladite deuxième entrée dudit deuxième fluide caloporteur.

Les orifices du collecteur débouchant vers les rampes de sortie peuvent être prévus dans toute portion de conduite dudit collecteur. Avantageusement et selon l'invention, ladite pluralité d'orifices de chaque collecteur est ménagée dans ladite première conduite latérale et ladite deuxième conduite latérale, ladite portion de conduite centrale du collecteur étant dépourvue d'orifices.

Rien n'empêche également de prévoir, dans le cas d'une matrice d'échanges thermiques présentant une forme cylindrique de révolution par exemple (la section droite transversale de la matrice d'échanges thermiques étant alors circulaire), que les orifices soient répartis sur l'ensemble d'une unique portion de conduite en arc de cercle.

Avantageusement et selon l'invention, ledit collecteur s'étend de façon à entourer, sans interruption, au moins deux tiers, en particulier au moins la moitié (50%), voire au moins 70%, du périmètre de ladite matrice d'échanges thermiques (mesuré dans un plan orthogonal à ladite direction longitudinale de chaque tubulure d'échanges thermiques de la matrice d'échanges thermiques).

Ledit collecteur s'étendant au moins en partie autour de ladite matrice d'échanges thermiques, il est possible de prévoir que chaque rampe de distribution relie ledit collecteur en deux points distincts. Ainsi, dans un mode de réalisation avantageux selon l'invention, ledit dispositif d'échange thermique comprend une pluralité de rampes de distribution de fluide, chaque rampe de distribution de fluide s'étendant entre au moins un orifice de ladite première conduite latérale dudit collecteur et au moins un orifice de ladite deuxième conduite latérale dudit collecteur.

Avantageusement et selon l'invention, chaque rampe de distribution de fluide s'étend principalement selon une direction orthogonale à ladite direction longitudinale de chaque tubulure d'échanges thermiques de ladite matrice d'échanges thermiques. En particulier, lesdites rampes de distribution s'étendent parallèlement les unes par rapport aux autres. De même, en particulier, lesdites rampes de distribution s'étendent principalement dans un même plan orthogonal à ladite direction longitudinale de chaque tubulure d'échanges thermiques.

Avantageusement et selon l'invention, chaque tubulure d'échanges thermiques comprend au moins un conduit intérieur et au moins un conduit extérieur imbriqués l'un dans l'autre, de façon à définir :
- un canal de circulation d'un fluide, dit canal intérieur, délimité par ledit conduit intérieur, et adapté pour pouvoir être alimenté par ledit premier fluide caloporteur,
- un canal de circulation d'un fluide, dit canal intermédiaire, délimité par l'espace inter-conduits entre ledit conduit intérieur et ledit conduit extérieur, et adapté pour pouvoir être alimenté par ledit deuxième fluide caloporteur.

Avantageusement et selon l'invention, ladite matrice d'échanges thermiques est adaptée pour permettre la circulation d'un premier flux de fluide caloporteur dans ladite enceinte de circulation selon une direction, dite direction principale de circulation du premier fluide, entre la première entrée et la première sortie.

Un dispositif d'échange thermique selon l'invention peut être à contre courants ou encore à co-courants (ou flux parallèles). Avantageusement et selon l'invention, le parcours du premier flux de fluide caloporteur et le parcours du deuxième flux de fluide caloporteur à l'intérieur de ladite enceinte de circulation peuvent être chacun sensiblement rectilignes. Selon un mode de réalisation particulièrement avantageux selon l'invention, ledit dispositif d'échange thermique est à contre-courant. Le dispositif d'échange thermique selon l'invention est adapté pour permettre la circulation du deuxième fluide caloporteur dans le passage du deuxième fluide caloporteur, selon une direction, dite direction de circulation du deuxième fluide, sensiblement parallèle à la direction principale de circulation du premier fluide.

Il est bien sûr également possible de prévoir un dispositif d'échange thermique dans lequel le flux de l'un et/ou de l'autre du premier ou du deuxième fluide caloporteur suit un parcours au sein de la matrice d'échanges thermiques en U ou encore en S (échangeurs dits multi-passes).

Avantageusement et selon l'invention, l'enceinte de circulation présente une périphérie fermée étanche aux fluides caloporteurs (au moins en fonctionnement et sans tenir compte des entrées et sorties pour le premier fluide caloporteur et pour le deuxième fluide caloporteur).

Avantageusement et selon l'invention, chaque fluide caloporteur peut être à l'état liquide ou gazeux. En particulier, l'état du premier fluide caloporteur peut être identique ou différent de l'état du deuxième fluide caloporteur. Avantageusement et selon l'invention, le dispositif d'échange thermique est configuré pour que le premier fluide caloporteur et le deuxième fluide caloporteur soient à l'état gazeux. En alternative, avantageusement et selon l'invention, le dispositif d'échange thermique est configuré pour que le premier fluide caloporteur soit à l'état gazeux et que le deuxième fluide caloporteur soit à l'état liquide.

Le deuxième fluide caloporteur peut correspondre au fluide dont la température est plus importante que la température du premier fluide caloporteur ou inversement. Ainsi, avantageusement et selon l'invention, le deuxième fluide caloporteur correspond au fluide caloporteur dont la température est supérieure à la température du premier fluide caloporteur. En d'autres termes, le premier fluide caloporteur peut être désigné fluide « froid » et le deuxième fluide caloporteur peut être désigné fluide « chaud ».

Avantageusement et selon l'invention, ledit dispositif d'échange thermique comprend un premier collecteur, dit collecteur d'entrée, et un deuxième collecteur, dit collecteur de sortie. Avantageusement et selon l'invention, ledit collecteur d'entrée comprend une bouche d'entrée formant ladite deuxième entrée dudit deuxième fluide caloporteur dans l'enceinte de circulation. Avantageusement et selon l'invention, ledit collecteur de sortie comprend une bouche de sortie formant ladite deuxième sortie dudit deuxième fluide caloporteur hors de l'enceinte de circulation.

Ledit dispositif d'échange thermique selon l'invention peut être formé en au moins un matériau choisi parmi les matériaux métalliques, les matériaux composites, les matériaux polymères, les matériaux céramiques, notamment le graphite, le verre... En particulier, dans un mode de réalisation particulièrement avantageux d'un dispositif d'échange thermique selon l'invention, les conduits de la matrice d'échanges thermiques sont formés en matériau métallique, notamment en au moins un matériau choisi dans le groupe formé des aciers, du cuivre, de l'aluminium, des alliages métalliques (superalliages notamment) et de leurs mélanges.

L'invention s'étend à un système de conditionnement d'air comprenant au moins un dispositif d'échange thermique selon l'invention. Il peut notamment s'agir d'un échangeur sans contact à contre-courants.

L'invention s'étend à un véhicule, notamment un aéronef, comprenant au moins un système de conditionnement d'air selon l'invention.

L'invention concerne aussi un dispositif d'échange thermique, un système de conditionnement d'air et un véhicule comprenant au moins un tel système de conditionnement d'air caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique en perspective d'un dispositif d'échange thermique selon l'invention,
[Fig. 2] est une vue schématique en perspective d'une partie d'un dispositif d'échange thermique selon l'invention dont une partie est une vue en coupe,
[Fig. 3] est une vue schématique en coupe d'une partie d'un collecteur et de rampes de distribution d'un dispositif d'échange thermique selon l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

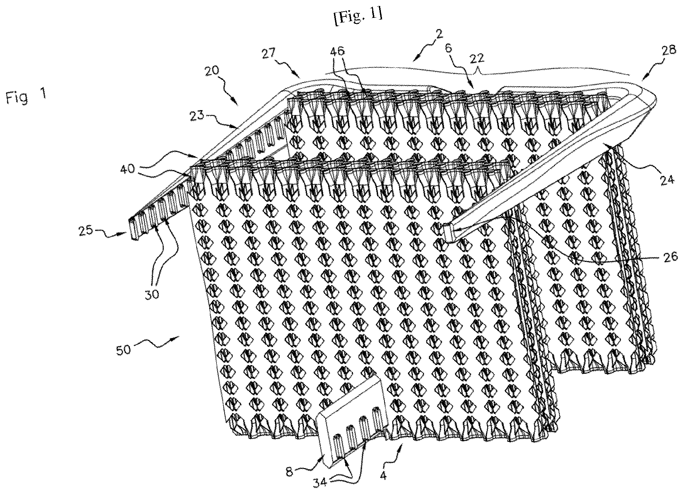

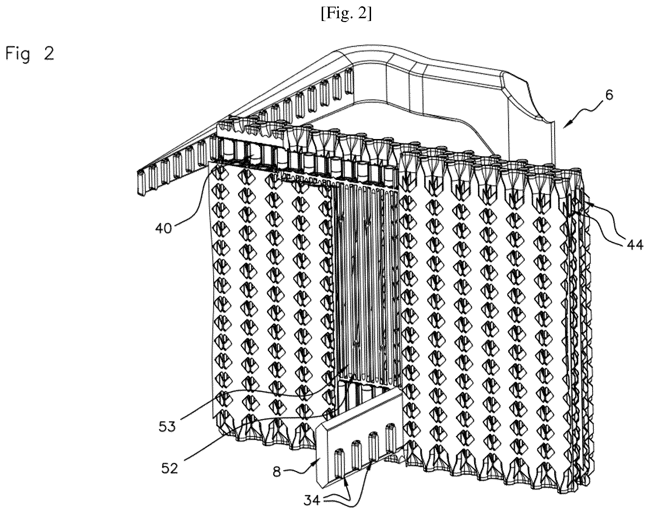

Les figures 1 et 2 illustrent schématiquement un dispositif d'échange thermique selon un premier mode de réalisation de l'invention.

Un tel dispositif d'échange thermique comprend une enceinte de circulation (non représentée). Le dispositif d'échange thermique comprend une première entrée 2 et une première sortie 4 d'un premier fluide caloporteur dans l'enceinte de circulation, ainsi qu'une deuxième entrée 6 et une deuxième sortie 8 d'un deuxième fluide caloporteur dans l'enceinte de circulation.

Le dispositif d'échange thermique comprend une matrice 50 d'échanges thermiques logée dans l'enceinte de circulation et formée d'une pluralité de tubulures d'échanges thermiques. Chaque tubulure d'échanges thermiques comprend au moins un conduit s'étendant principalement selon une direction longitudinale entre deux extrémités opposées l'une par rapport à l'autre. Chaque conduit délimite au moins en partie un canal de circulation d'un deuxième fluide caloporteur.

La matrice 50 d'échanges thermiques permet donc la circulation du premier fluide caloporteur et du deuxième fluide caloporteur dans et à travers l'enceinte de circulation et le transfert de calories entre ceux-ci.

Le premier fluide caloporteur, dit fluide « froid », circule dans des zones de circulation du premier fluide caloporteur selon une direction principale de circulation du premier fluide entre la première entrée 2 et la première sortie 4. Le deuxième fluide caloporteur, dit fluide « chaud », circule dans des zones de circulation du deuxième fluide caloporteur, distinctes des zones de circulation du premier fluide caloporteur, entre la deuxième entrée et la deuxième sortie.

La matrice 50 d'échanges thermiques présente une forme générale présentant quatre faces principales sensiblement parallèles à ladite direction longitudinale. Dans le mode de réalisation représenté, la matrice d'échanges thermiques présente sensiblement une forme générale de pavé droit (contenue dans un pavé droit). La section droite transversale de la matrice 50 d'échanges thermiques présente donc une forme rectangulaire, chaque collecteur 20 s'étendant autour de la matrice 50 d'échanges thermiques de façon à entourer trois côtés dudit rectangle. Dans le mode de réalisation représenté, chaque collecteur 20 présente une forme générale en U. Rien n'empêche de prévoir une matrice d'échanges thermiques de forme générale différente, notamment plus complexe, dont les faces externes latérales sont courbes et/ou encore dont la section droite transversale (par rapport à la direction longitudinale selon laquelle s'étendent les tubulures d'échanges thermiques) est proche d'une forme en L ou encore en D en fonction de l'espace disponible pour son intégration. Un échangeur de chaleur présente d'ailleurs l'avantage de permettre de nombreuses formes, le collecteur et les rampes de distribution pouvant s'adapter en conséquence à celles-ci.

Dans le mode de réalisation illustré dans les figures 1 à 3, chaque tubulure d'échanges thermiques comprend un conduit intérieur 53 et un conduit extérieur 52 imbriqués l'un dans l'autre, de façon à définir un canal intérieur, délimité par le conduit intérieur, adapté pour pouvoir être alimenté par ledit premier fluide caloporteur, et un canal intermédiaire, délimité par l'espace inter-conduits entre ledit conduit intérieur 53 et ledit conduit extérieur 52, adapté pour pouvoir être alimenté par le deuxième fluide caloporteur.

Le dispositif d'échange thermique comprend un collecteur 20 de fluide. Le collecteur 20 comprend la deuxième entrée 6 du deuxième fluide caloporteur. Chaque collecteur 20 s'étend sensiblement principalement dans un plan orthogonal à la direction longitudinale et entoure au moins en partie trois desdites quatre faces principales de la matrice 50 d'échanges thermiques. Chaque collecteur 20 comprend une pluralité d'orifices 30 permettant le passage de fluide. Dans le mode de réalisation représenté, chaque orifice 30 présente une forme oblongue.

Chaque collecteur 20 comprend une portion de conduite centrale 22 s'étendant selon une direction principale entre une première extrémité 27 et une deuxième extrémité 28, une première portion de conduite latérale 23 et une deuxième portion de conduite latérale 24. La première portion de conduite latérale 23 et la deuxième portion de conduite latérale 24 s'étendent chacune selon une direction sensiblement orthogonale à la direction principale de la portion de conduite centrale 22. Le collecteur s'étend ainsi en formant un U d'une première extrémité distale 25 à une deuxième extrémité distale 26, la première portion de conduite latérale 23 s'étendant jusqu'à l'extrémité distale 25 et la deuxième portion de conduite latérale 24 s'étendant jusqu'à l'extrémité distale 26. Le collecteur 20 permet donc de distribuer le deuxième fluide caloporteur tout autour de la matrice d'échanges thermiques tout en présentant un encombrement minimal et sans entraver la circulation du premier fluide caloporteur qui pénètre dans les espaces laissés libres autour des conduits 52 ainsi que, par les ouvertures 46 à l'intérieur des conduits intérieurs 53. Chaque portion de conduite 22, 23, 24 du collecteur 20 peut présenter une section variable et différentes formes. Chaque portion de conduite 22, 23, 24 du collecteur peut présenter une section droite transversale de surface variable entre la deuxième entrée 6 du deuxième fluide caloporteur ou entre leurs extrémités longitudinales. Comme on peut le voir sur les figures 1 et 2, c'est le cas dans le mode de réalisation représenté. En particulier, la section droite transversale de la première portion de conduite latérale 23 diminue progressivement entre la première extrémité 27 de la portion de conduite centrale 22 et l'extrémité distale 25. De même, la section droite transversale de la deuxième portion de conduite latérale 24 diminue également progressivement entre la deuxième extrémité 28 de la portion de conduite centrale 22 et l'extrémité distale 26. D'autre part, dans le mode de réalisation représenté chaque portion de conduite 22, 23, 24 du collecteur 20 présente une section droite transversale de forme sensiblement oblongue et/ou sensiblement rectangulaire.

Rien n'empêche cependant de prévoir que le collecteur et chaque portion de conduite de celui-ci, ne s'étendent autrement que strictement orthogonalement à la direction longitudinale de chaque tubulure d'échanges thermiques. Le collecteur pourrait s'étendre sensiblement dans un plan formant un angle non nul, par exemple inférieur à 30°, avec un plan orthogonal à la direction longitudinale de chaque tubulure d'échanges thermiques. Ceci permet de s'adapter à diverses formes souhaitées et notamment aux contraintes d'encombrement de façon à optimiser l'espace utilisé. Dans tous les cas, chaque collecteur présente l'avantage de pouvoir être configuré en permettant une arrivée et/ou une sortie latérale(s) du deuxième fluide et non dans le prolongement longitudinal de la matrice d'échanges thermiques.

Le dispositif d'échange thermique comprend une pluralité de rampes 40 de distribution de fluide configurées pour permettre la circulation du deuxième fluide caloporteur entre au moins un orifice 30 du collecteur 20 et au moins un conduit 52 de la pluralité de tubulures d'échanges thermiques. Chaque orifice 30 du collecteur débouche vers une rampe 40 de distribution. Dans le mode de réalisation représenté, chaque rampe 40 de distribution de fluide s'étend entre un orifice 30 de la première portion de conduite latérale 23 du collecteur et un orifice de la deuxième portion de conduite latérale 24 du collecteur. La portion de conduite centrale 22 du collecteur est dépourvue d'orifices 30, les orifices étant ici uniquement prévus dans la première conduite latérale 23 et la deuxième conduite latérale 24 du collecteur 20. On peut voir sur la figure 2 qu'une partie de la rampe 40 de distribution visible au premier plan de la matrice 50 d'échanges thermiques est représentée en arraché dans lequel les parois des conduits 52 ont été retirées aux fins d'illustration. De même, sur la figure 2, une partie des tubulures est représentée en coupe longitudinale de façon à permettre la visualisation des canaux intérieurs et des canaux intermédiaires des conduits extérieurs 52 et des conduits intérieurs 53. Chaque tubulure d'échanges thermiques présente donc une extrémité longitudinale reliée à une rampe 40 de distribution. Les rampes 40 de distribution s'étendent parallèlement les unes par rapport aux autres et dans un même plan orthogonal à la direction longitudinale de chaque tubulure d'échanges thermiques.

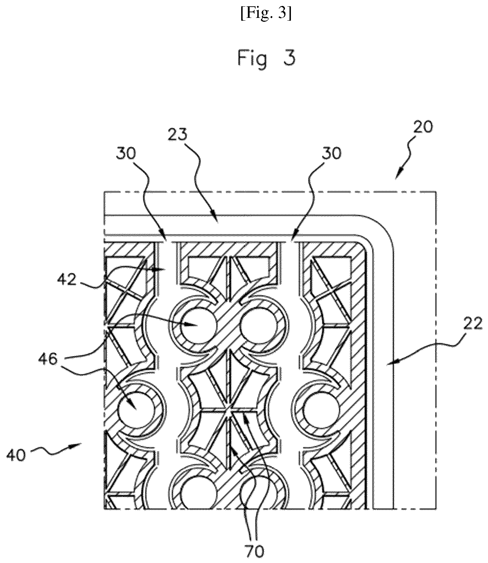

La figure 3 illustre schématiquement en coupe une portion du collecteur 20 et une portion de deux rampes 40 de distribution du dispositif d'échange thermique. Plus précisément, le détail représenté en figure 3 montre une portion de la première conduite latérale 23 et de la portion de conduite centrale 22 du collecteur 20. On peut voir deux orifices 30 ménagés au sein de la première portion de conduite latérale 23 reliés chacun à une rampe 40 de distribution, chaque rampe 40 de distribution comprenant un canal 42 reliant à une pluralité de conduits 52. Chaque rampe 40 de distribution présente des ouvertures 44 présentant sensiblement les mêmes dimensions que les dimensions de chaque orifice 30 du collecteur en regard duquel elle est positionnée. On peut voir également sur la figure 3 des renforts 70 permettant d'améliorer la raideur des rampes 40 de distribution. Dans le mode de réalisation représenté, l'ensemble des rampes 40 de distribution du dispositif d'échange thermique est formé d'une même pièce (par exemple par impression tridimensionnelle (ou fabrication additive) ou encore par moulage).

Dans le mode de réalisation représenté, en sortie (partie inférieure de la matrice 50 d'échanges thermiques en figures 1 et 2), le deuxième fluide caloporteur est évacué depuis l'ensemble des conduits 52 via un bras central présentant la deuxième sortie 8. Rien n'empêche cependant de prévoir en sortie un collecteur de sortie identique au collecteur 20 d'entrée. Rien n'empêche également de prévoir que la deuxième sortie ne soit pas disposée sensiblement au centre de la matrice 50 d'échanges thermiques mais plus ou moins décalée vers un bord de la matrice 50 d'échanges thermiques selon la configuration souhaitée.

Comme on peut le voir sur les figures 1 et 2, la deuxième sortie 8 n'est pas disposée du même côté de la matrice d'échanges thermiques que la deuxième entrée 6, mais diamétralement opposée à celle-ci (sans être disposée dans un même plan). Ceci permet de favoriser la distribution et la répartition du deuxième fluide caloporteur dans l'ensemble des tubulures d'échanges thermiques de la matrice 50 d'échanges thermiques. Ainsi, dans le mode de réalisation représenté, l'entrée 6 de fluide du collecteur 20 et la deuxième sortie 8 du bras central sont configurées de façon à être disposées sur deux faces distinctes l'une de l'autre et parallèles entre elles des quatre faces principales de la matrice d'échanges thermiques sensiblement parallèles à ladite direction longitudinale.

Chaque collecteur 20 peut en outre être connecté à un conduit d'arrivée ou d'évacuation du premier fluide caloporteur ou du deuxième fluide caloporteur.

Un dispositif d'échange thermique selon l'invention permet donc effectivement de distribuer efficacement un fluide dans une matrice 50 d'échanges thermiques comprenant des conduits tout en présentant un faible encombrement. La configuration de chaque collecteur 20 d'un dispositif d'échange thermique selon l'invention rend possible diverses configurations d'intégration dans un système de conditionnement d'air.

L'invention ne se limite pas aux modes de réalisation décrits. En particulier, rien n'empêche de prévoir des conduits non rectilignes ou encore des conduits intérieurs et extérieurs non cylindriques et non concentriques. En outre, l'invention ne se limite pas seulement aux échangeurs de chaleur destinés aux systèmes de conditionnement d'air, mais s'applique également avantageusement aux échangeurs de chaleur destinés à tous types d'applications d'échanges thermiques tels que des systèmes de refroidissement de fluide.

Il est également possible de prévoir d'accoler latéralement deux dispositifs d'échange thermique selon l'invention (ou plus), une portion de conduite latérale du collecteur pouvant être commune aux deux collecteurs juxtaposés, cette portion de conduite latérale présentant des orifices débouchant d'une part, vers une première matrice d'échanges thermiques et, d'autre part, vers une deuxième matrice d'échanges thermiques.

## Revendications

1. Dispositif d'échange thermique comprenant :
- une enceinte de circulation comprenant une première entrée (2) d'un premier fluide caloporteur dans l'enceinte de circulation et une première sortie (4) dudit premier fluide caloporteur hors de l'enceinte de circulation,
- une matrice (50) d'échanges thermiques logée dans ladite enceinte de circulation et formée d'une pluralité de tubulures d'échanges thermiques, chaque tubulure d'échanges thermiques comprenant au moins un conduit (52) et s'étendant principalement selon une direction longitudinale entre deux extrémités opposées l'une par rapport à l'autre, chaque conduit délimitant au moins en partie un canal de circulation d'un deuxième fluide caloporteur,
- une deuxième entrée (6) dudit deuxième fluide caloporteur dans l'enceinte de circulation,
- une deuxième sortie (8) dudit deuxième fluide caloporteur hors de l'enceinte de circulation,
**caractérisé en ce qu'**il comprend en outre :
- au moins un collecteur (20) comprenant au moins une portion de conduite et comprenant l'une de ladite deuxième entrée dudit deuxième fluide caloporteur et de ladite deuxième sortie dudit deuxième fluide caloporteur, ledit collecteur ne s'étendant pas parallèlement à ladite direction longitudinale de chaque tubulure d'échanges thermiques de ladite matrice d'échanges thermiques, ledit collecteur comprenant une pluralité d'orifices (30), chaque collecteur étant configuré pour permettre une circulation dudit deuxième fluide caloporteur entre l'une de ladite deuxième entrée dudit deuxième fluide caloporteur et de ladite deuxième sortie dudit deuxième fluide caloporteur et lesdits orifices (30),
- au moins une rampe (40) de distribution de fluide configurée pour permettre la circulation dudit deuxième fluide caloporteur entre au moins un orifice (30) dudit collecteur et au moins deux tubulures d'échanges thermiques, chaque orifice (30) dudit collecteur (20) débouchant vers une rampe (40) de distribution et au moins une extrémité longitudinale de chaque tubulure d'échanges thermiques étant reliée à une rampe de distribution.

2. Dispositif selon la revendication 1, **caractérisé en ce que** chaque portion de conduite dudit collecteur (20) s'étend de façon à entourer, au moins en partie, ladite matrice d'échanges thermiques.

3. Dispositif selon l'une des revendications 1 ou 2, **caractérisé en ce que** ledit collecteur s'étend sensiblement principalement dans un plan orthogonal à ladite direction longitudinale de chaque tubulure d'échanges thermiques

4. Dispositif selon l'une des revendications 1 à 3, **caractérisé en ce que** chaque collecteur (20) présente une forme générale en U.

5. Dispositif selon l'une des revendications 1 à 4, **caractérisé en ce que** chaque collecteur (20) comprend une portion de conduite centrale (22) s'étendant selon une direction principale entre une première extrémité (27) et une deuxième extrémité (28), ladite première extrémité de ladite portion de conduite principale (22) étant prolongée d'une première portion de conduite latérale (23) et ladite deuxième extrémité (28) de ladite portion de conduite principale (22) étant prolongée d'une deuxième portion de conduite latérale (24), ladite première portion de conduite latérale (23) et ladite deuxième portion de conduite latérale (24) s'étendant chacune selon une direction sensiblement orthogonale à ladite direction principale de ladite portion de conduite centrale (22).

6. Dispositif selon la revendication 5, **caractérisé en ce que** ladite portion de conduite centrale (22) dudit collecteur (20) comprend ladite deuxième entrée (6) dudit deuxième fluide caloporteur.

7. Dispositif selon l'une des revendications 5 ou 6, **caractérisé en ce que** ladite pluralité d'orifices (30) de chaque collecteur est ménagée dans ladite première conduite latérale (23) et ladite deuxième conduite latérale (24), ladite portion de conduite centrale (22) du collecteur étant dépourvue d'orifices (30).

8. Dispositif selon l'une des revendications 5 à 7, **caractérisé en ce qu'**il comprend une pluralité de rampes (40) de distribution de fluide, chaque rampe (40) de distribution de fluide s'étendant entre au moins un orifice (30) de ladite première conduite latérale (23) dudit collecteur et au moins un orifice (30) de ladite deuxième conduite latérale (24) dudit collecteur.

9. Dispositif selon l'une des revendications 1 à 8, **caractérisé en ce que** chaque rampe (40) de distribution de fluide s'étend principalement selon une direction orthogonale à ladite direction longitudinale de chaque tubulure d'échanges thermiques de ladite matrice d'échanges thermiques.

10. Dispositif selon l'une des revendications 1 à 9, **caractérisé en ce que** chaque tubulure d'échanges thermiques comprend au moins un conduit intérieur et au moins un conduit extérieur imbriqués l'un dans l'autre, de façon à définir :
- un canal de circulation d'un fluide, dit canal intérieur (53), délimité par ledit conduit intérieur, et adapté pour pouvoir être alimenté par ledit premier fluide caloporteur,
- un canal de circulation d'un fluide, dit canal intermédiaire, délimité par l'espace inter-conduits entre ledit conduit intérieur et ledit conduit extérieur, et adapté pour pouvoir être alimenté par ledit deuxième fluide caloporteur.

11. Système de conditionnement d'air **caractérisé en ce qu'**il comprend au moins un dispositif d'échange thermique selon l'une des revendications 1 à 10.

12. Véhicule -notamment aéronef- **caractérisé en ce qu'**il comprend au moins un système de conditionnement d'air selon la revendication 11.

## Patentansprüche

1. Wärmetauschervorrichtung, umfassend:
- ein Strömungsgehäuse, umfassend einen ersten Einlass (2) für ein erstes Wärmeträgerfluid in das Strömungsgehäuse und einen ersten Auslass (4) für das erste Wärmeträgerfluid aus dem Strömungsgehäuse,
- eine Wärmetauschermatrix (50), die in dem Strömungsgehäuse aufgenommen und aus einer Vielzahl von Wärmetauscherrohren gebildet ist, wobei jedes Wärmetauscherrohr mindestens eine Leitung (52) umfasst und sich hauptsächlich in einer Längsrichtung zwischen zwei einander gegenüberliegenden Enden erstreckt, wobei jede Leitung zumindest teilweise einen Strömungskanal für ein zweites Wärmeträgerfluid begrenzt,
- einen zweiten Einlass (6) für das zweite Wärmeträgerfluid in das Strömungsgehäuse,
- einen zweiten Auslass (8) für das zweite Wärmeträgerfluid aus dem Strömungsgehäuse,
**dadurch gekennzeichnet, dass** sie ferner Folgendes umfasst:
- mindestens einen Verteiler (20), der mindestens einen Leitungsabschnitt umfasst und einen von dem zweiten Einlass für das zweite Wärmeträgerfluid und dem zweiten Auslass für das zweite Wärmeträgerfluid umfasst, wobei sich der Verteiler nicht parallel zu der Längsrichtung jedes Wärmetauscherrohrs der Wärmetauschermatrix erstreckt, wobei der Verteiler eine Vielzahl von Öffnungen (30) umfasst, wobei jeder Verteiler dazu ausgebildet ist, eine Strömung des zweiten Wärmeträgerfluids zwischen einem von dem zweiten Einlass für das zweite Wärmeträgerfluid und dem zweiten Auslass für das zweite Wärmeträgerfluid und den Öffnungen (30) zu ermöglichen,
- mindestens eine Fluidverteilerschiene (40), die dazu ausgebildet ist, die Strömung des zweiten Wärmeträgerfluids zwischen mindestens einer Öffnung (30) des Verteilers und mindestens zwei Wärmetauscherrohren zu ermöglichen, wobei jede Öffnung (30) des Verteilers (20) zu einer Verteilerschiene (40) hin mündet und mindestens ein Längsende jedes Wärmetauscherrohrs mit einer Verteilerschiene verbunden ist.

2. Vorrichtung nach Anspruch 1, **dadurch gekennzeichnet, dass** sich jeder Leitungsabschnitt des Verteilers (20) so erstreckt, dass er die Wärmetauschermatrix zumindest teilweise umgibt.

3. Vorrichtung nach Anspruch 1 oder 2, **dadurch gekennzeichnet, dass** sich der Verteiler im Wesentlichen hauptsächlich in einer Ebene senkrecht zu der Längsrichtung jedes Wärmetauscherrohrs erstreckt.

4. Vorrichtung nach einem der Ansprüche 1 bis 3, **dadurch gekennzeichnet, dass** jeder Verteiler (20) eine allgemeine U-Form aufweist.

5. Vorrichtung nach einem der Ansprüche 1 bis 4, **dadurch gekennzeichnet, dass** jeder Verteiler (20) einen mittleren Leitungsabschnitt (22) umfasst, der sich in einer Hauptrichtung zwischen einem ersten Ende (27) und einem zweiten Ende (28) erstreckt, wobei das erste Ende des Hauptleitungsabschnitts (22) durch einen ersten seitlichen Leitungsabschnitt (23) verlängert ist und das zweite Ende (28) des Hauptleitungsabschnitts (22) durch einen zweiten seitlichen Leitungsabschnitt (24) verlängert ist, wobei sich der erste seitliche Leitungsabschnitt (23) und der zweite seitliche Leitungsabschnitt (24) jeweils in einer Richtung erstrecken, die im Wesentlichen senkrecht zu der Hauptrichtung des mittleren Leitungsabschnitts (22) ist.

6. Vorrichtung nach Anspruch 5, **dadurch gekennzeichnet, dass** der mittlere Leitungsabschnitt (22) des Verteilers (20) den zweiten Einlass (6) für das zweite Wärmeträgerfluid umfasst.

7. Vorrichtung nach Anspruch 5 oder 6, **dadurch gekennzeichnet, dass** die Vielzahl von Öffnungen (30) jedes Verteilers in der ersten seitlichen Leitung (23) und der zweiten seitlichen Leitung (24) vorgesehen ist, wobei der mittlere Leitungsabschnitt (22) des Verteilers keine Öffnungen (30) aufweist.

8. Vorrichtung nach einem der Ansprüche 5 bis 7, **dadurch gekennzeichnet, dass** sie eine Vielzahl von Fluidverteilerschienen (40) umfasst, wobei sich jede Fluidverteilerschiene (40) zwischen mindestens einer Öffnung (30) der ersten seitlichen Leitung (23) des Verteilers und mindestens einer Öffnung (30) der zweiten seitlichen Leitung (24) des Verteilers erstreckt.

9. Vorrichtung nach einem der Ansprüche 1 bis 8, **dadurch gekennzeichnet, dass** sich jede Fluidverteilerschiene (40) hauptsächlich in einer Richtung senkrecht zu der Längsrichtung jedes Wärmetauscherrohrs der Wärmetauschermatrix erstreckt.

10. Vorrichtung nach einem der Ansprüche 1 bis 9, **dadurch gekennzeichnet, dass** jedes Wärmetauscherrohr mindestens eine innere Leitung und mindestens eine äußere Leitung umfasst, die ineinander verschachtelt sind, um Folgendes zu definieren:
- einen Strömungskanal für ein Fluid, als Innenkanal (53) bezeichnet, der durch die innere Leitung begrenzt ist und dazu geeignet ist, mit dem ersten Wärmeträgerfluid gespeist werden zu können,
- einen Strömungskanal für ein Fluid, als Zwischenkanal bezeichnet, der durch den Leitungszwischenraum zwischen der inneren Leitung und der äußeren Leitung begrenzt ist und dazu geeignet ist, mit dem zweiten Wärmeträgerfluid gespeist werden zu können.

11. Klimaanlage, **dadurch gekennzeichnet, dass** sie mindestens eine Wärmetauschervorrichtung nach einem der Ansprüche 1 bis 10 umfasst.

12. Fahrzeug - insbesondere Luftfahrzeug -, **dadurch gekennzeichnet, dass** es mindestens eine Klimaanlage nach Anspruch 11 umfasst.

## Claims

1. Heat-exchange device comprising:
- a flow enclosure comprising a first inlet (2) for a first heat-transfer fluid into the flow enclosure and a first outlet (4) for said first heat-transfer fluid out of the flow enclosure,
- a heat-exchange matrix (50) housed in said flow enclosure and formed from a plurality of heat-exchange tubes, each heat-exchange tube comprising at least one conduit (52) and extending principally in a longitudinal direction between two mutually opposing ends, each conduit defining, at least in part, a flow channel for a second heat-transfer fluid,
- a second inlet (6) for said second heat-transfer fluid into the flow enclosure,
- a second outlet (8) for said second heat-transfer fluid out of the flow enclosure,
**characterized in that** it further comprises:
- at least one collector (20) comprising at least one conduit portion and comprising one of said second inlet for said second heat-transfer fluid and of said second outlet for said second heat-transfer fluid, said collector not extending parallel to said longitudinal direction of each heat-exchange tube of said heat-exchange matrix, said collector comprising a plurality of orifices (30), each collector being configured to enable a flow of said second heat-transfer fluid between one of said second inlet for said second heat-transfer fluid and of said second outlet for said second heat-transfer fluid and said orifices (30),
- at least one fluid distribution duct (40) configured to enable the flow of said second heat-transfer fluid between at least one orifice (30) of said collector and at least two heat-exchange tubes, each orifice (30) of said collector (20) opening towards a distribution duct (40), and at least one longitudinal end of each heat-exchange tube being connected to a distribution duct.

2. Device as claimed in claim 1, **characterized in that** each conduit portion of said collector (20) extends so as to surround, at least in part, said heat-exchange matrix.

3. Device as claimed in any one of claims 1 or 2, **characterized in that** said collector extends substantially principally in a plane orthogonal to said longitudinal direction of each heat-exchange tube.

4. Device as claimed in any one of claims 1 to 3, **characterized in that** each collector (20) is generally of a U shape.

5. Device as claimed in any one of claims 1 to 4, **characterized in that** each collector (20) comprises a central conduit portion (22) extending in a main direction between a first end (27) and a second end (28), said first end of said main conduit portion (22) being extended by a first lateral conduit portion (23) and said second end (28) of said main conduit portion (22) being extended by a second lateral conduit portion (24), said first lateral conduit portion (23) and said second lateral conduit portion (24) each extending in a direction substantially orthogonal to said main direction of said central conduit portion (22).

6. Device as claimed in claim 5, **characterized in that** said central conduit portion (22) of said collector (20) comprises said second inlet (6) of said second heat-transfer fluid.

7. Device as claimed in any one of claims 5 or 6, **characterized in that** said plurality of orifices (30) of each collector is provided in said first lateral conduit (23) and said second lateral conduit (24), said central conduit portion (22) of the collector having no orifices (30).

8. Device as claimed in any one of claims 5 to 7, **characterized in that** it comprises a plurality of fluid distribution ducts (40), each fluid distribution duct (40) extending between at least one orifice (30) of said first lateral conduit (23) of said collector and at least one orifice (30) of said second lateral conduit (24) of said collector.

9. Device as claimed in any one of claims 1 to 8, **characterized in that** each fluid distribution duct (40) extends principally in a direction orthogonal to said longitudinal direction of each heat-exchange tube of said heat-exchange matrix.

10. Device as claimed in any one of claims 1 to 9, **characterized in that** each heat-exchange tube comprises at least one interior conduit and at least one exterior conduit which are nested one inside the other so as to define:
- a flow channel for a fluid, referred to as the interior channel (53), defined by said interior conduit, and adapted to be able to be supplied with said first heat-transfer fluid,
- a flow channel for a fluid, referred to as the intermediate channel, defined by the inter-conduit space between said interior conduit and said exterior conduit, and adapted to be able to be supplied with said second heat-transfer fluid.

11. Air-conditioning system **characterized in that** it comprises at least one heat-exchange device as claimed in any one of claims 1 to 10.

12. Vehicle - in particular an aircraft - **characterized in that** it comprises at least one air-conditioning system as claimed in claim 11.
